# EUROPÄISCHE PATENTSCHRIFT

(11) **EP 0 556 692 B1**
(45) Veröffentlichungstag und Bekanntmachung des Hinweises auf die Patenterteilung: **11.11.1998**
(21) Anmeldenummer: 93101985.5
(22) Anmeldetag: 09.02.1993
(51) Int. Cl.: B29C 47/00, B29D 23/20

(54) **Verfahren zur Herstellung eines Einbauelements für Wärmetauscher-, Stoffaustauscher- und/oder Bioreaktor-Systeme und Vorrichtung zur Durchführung des Verfahrens**
Method for producing a built-in element for heat-exchangers, material-exchangers and/or bioreactor-systems and device for accomplishing that method
Procédé pour la fabrication d'un élément de construction pour systèmes d'échangeur thermique, d'échangeur de matières et/ou de bio-réacteurs et dispositif pour la réalisation du procédé

(30) Priorität: 12.02.1992 DE 4204041
(43) Veröffentlichungstag der Anmeldung: 25.08.1993
(73) Patentinhaber: 2H KUNSTSTOFF GmbH, D-48493 Wettringen (DE)
(72) Erfinder: Hewing, Bernd, W-4434 Ochtrup (DE); Broda, Siegfried, W-4358 Haltern 6 (DE)
(74) Vertreter: Schulze Horn, Stefan, Dipl.-Ing. M.Sc.

(56) Entgegenhaltungen:
- DE-A- 3 223 315
- US-A- 4 365 948
- US-A- 4 681 526

## Beschreibung

Die vorliegende Erfindung betrifft ein Verfahren zur Herstellung eines Einbauelements für Wärmetauscher-, Stoffaustauscher- und/oder Bioreaktor-Systeme, wobei mindestens zwei Wände aus strukturierten, thermoplastischen Kunststoffflächen miteinander verbunden werden, und eine Vorrichtung, die mindestens einen Extruder mit einem daran angeordneten Extruderkopf aufweist.

Einbauelemente für Warmetauscher-, Stoffaustauscher- und Bioreaktor-Systeme, insbesondere für Kühltürme, sind beispielsweise aus der DE-OS 39 05 696 bekannt. Das bekannte Einbauelement besteht aus wenigstens zwei aufeinander befestigten Rieselwänden, letztere gefertigt aus steifer thermoplastischer Kunststoffolie, die mit rasterartig verteilten, aufstehenden Befestigungselementen ausgestattet ist, wobei bei den übereinander liegenden Rieselwänden Befestigungselemente in Form von kleinen Hohlsäulen oder Hohlkegeln oder dergl. ausgebildet sind, die von den entsprechenden Befestigungselemente der anliegenden Rieselwand fingerhut- oder druckknopfartig überstülpt sind und in einer Geraden fluchten, wobei die Rieselwände als gewellte Flächen mit parallel zueinander durchlaufenden Scheitel und Sohlenbereichen gestaltet sind, wobei sowohl in den Scheitel- als auch in den Sohlenbereichen die genannten kompatiblen Befestigungselemente angeordnet sind, und wobei die beiden jeweils aufeinander befestigten Rieselwände derart zueinander angeordnet sind, daß die Ausrichtungen der Scheitel- und Sohlenbereiche einen Winkel β zueinander bilden.

Vom Anmelder der vorliegenden Anmeldung ist in der europäischen Patentanmeldung Nr. 92 101 667.1 ein Einbauelement vorgeschlagen worden für Wärmetauscher-, Stoffaustauscher- oder Bioreaktor-Systeme, wobei das Element entlang von darin gebildeten Strömungswegen von zwei in Austausch oder Reaktion miteinander tretenden fluiden Medien im Gegen- oder Kreuzgegenstrom durchströmbar ist, wobei das Element eine Eintrittsseite und eine Austrittsseite für das erste Medium und eine Eintrittsseite und eine Austrittsseite für das zweite Medium aufweist, wobei das Element aus mindestens zwei aufeinander befestigten Wänden der Dicke d aus thermoplastischer Kunststofffolie besteht, wobei die Wände jeweils als gewellte Flächen mit im wesentlichen parallel laufenden Scheitelbereichen und Sohlenbereichen gestaltet sind, wobei in den Scheitel- und Sohlenbereichen Befestigungsstellen angeordnet sind und wobei zwei benachbarte, aufeinander befestigten Wände der Art zueinander angeordnet sind, daß die Ausrichtungen der Scheitel- und Sohlenbereiche einen Winkel β zwischen 0 und 120° zueinander bilden, wobei das Einbauelement in Strömungsrichtung des einen der zwei fluiden Medien gesehen aus modular hintereinandergeschalteten Elementabschnitten besteht, wobei sich jeweils von einem Elementabschnitt zum nächstfolgenden Elementabschnitt das Strömungsverhältnis zwischen den beiden fluiden Medien von Gegenstrom in Kreuzgegenstrom oder von Kreuzgegenstrom in Gegenstrom ändert.

In einem bekannten Verfahren zur Herstellung einer Rieselwand, beispielsweise nach DE-OS 39 05 696, wird ein Schmelzeband aus einem Extruderkopf extrudiert, abgekühlt, auf die erforderlichen Längen- und Breitenmaße zu Folienstücken abgeteilt, und die Folienstücke werden in einem diskontinuierlichen Verfahren in einer Formpresse zunächst aufgewärmt und dann verformt und anschließend aus der Formpresse heraustransportiert. Es handelt sich hier also um ein taktweises Verformen von Folienstücken. Das bekannte Verfahren ist aufwendig und nur wenig produktiv, da die Formpresse in einem Takt eine Erwärmung und eine anschließende Verformung durchführt, wodurch die Taktzeit relativ lang wird.

Zur Herstellung eines Einbauelementes mit mindestens einem verdickten Randbereich ist das bekannte Verfahren nur durch einen relativ komplizierten Umbau der Formpresse geeignet, was das Verfahren zusätzlich verteuert.

Das aus DE-A-39 05 696 bekannte Rieselpaneel und zugehörige Verfahren weist weiter die Nachteile auf, daß die Kunststoffflächen in einem diskontinuierlichen Tiefziehverfahren ausgeformt werden. Als Ausgangsmaterial wird eine vorgefertigte, zunächst ebene Kunststoffolie verwendet, die eine über ihre Breite gesehen konstante Materialstärke aufweist. Bei einem Tiefziehvorgang werden bei einer vorgefertigten Folie deren Außenmaße beeinflußt, so daß sie nach dem Tiefziehvorgang verändert vorliegen. Das macht einen Randbeschnitt der ausgeformten Folie erforderlich. Der Randbeschnitt schwächt das Gefüge und erhöht das Risiko von vom Rand ausgehenden Rissen. Schließlich ist die maximale Größe der hergestellten Kunststoffläche auf die Größe der Formpresse begrenzt.

Aus der DE-OS-32 23 315 ist eine Vorrichtung zum Herstellen von Wellrohren aus thermoplastischen Kunststoff bekannt. Sie dient zum Herstellen von Wellrohren aus thermoplastischen Kunststoff mit Hilfe eines an einem Extruder angeschlossenen sogenannten Raupenabzuges. Dieser wird von zwei endlosen Formbackenreihen gebildet, deren Formsegmente in einer koaxial zur Extruderdüse befindlichen Arbeitsstrecke parallel nebeneinander laufen, eine geschlossene Hohlform bilden und dabei das Kunststoffrohr umschließen. Um die Stoß an Stoß in Führungsbahnen bewegten Formsegmente parallel zueinander dem Rohr anzunähern und von ihm wieder parallel zueinander abzuziehen, sind an ihnen vorder- und rückseitig Rollen gelagert, die in Kanäle der Führungsbahnen eingreifen. Mindestens in den Bereichen der Parallelverschiebung der Formsegmente sind gesonderte, in ihrer Steigung versetzt zueinander angeordnete Kanäle vorgesehen, deren Vorsatz dem Abstand der vorderen Rolle von der hinteren Rolle entspricht.

Nachteilig behandelt die vorstehende Schrift nicht das Problem der Erzeugung einer bestimmten Breite eines Bandes, da es für Wellrohre nicht relevant ist.

Es ist eine Aufgabe der vorliegenden Erfindung, ein Verfahren zur Herstellung eines Einbauelementes zu schaffen, welches weitgehend kontinuierlich abläuft, einfach auf eine gewählt veränderbare Dicke der Kunststoffolie einstellbar ist und eine hohe Produktionsleistung ermöglicht.

Die Lösung der Aufgabe erfolgt mit einem gattungsgemäßen Verfahren mit den kennzeichnenden Merkmalen des Patentanspruches 1.

Vorteilhafte Ausgestaltungen des erfindungsgemäßen Verfahrens sind in den Unteransprüchen 1 bis 24 dargelegt.

Es ist eine weitere Aufgabe der vorliegenden Erfindung, eine Vorrichtung zur Durchführung des erfinderischen Verfahrens zu schaffen.

Die Lösung dieser Aufgabe erfolgt mit einer Vorrichtung mit den Merkmalen des Patentanspruches 25, wobei vorteilhafte Ausgestaltungen der erfinderischen Vorrichtung in den Unteransprüchen 26 bis 40 dargestellt sind.

In dem erfinderischen Verfahren nach dem Patentanspruch 1 wird ein Schmelzeband kontinuierlich extrudiert und nach Durchlaufen einer Vorkühlstrecke einer umlaufenden Formbandpresse zugeführt, wobei beim Einlauf des Schmelzebandes in die Formbandpresse das Kunststoffmaterial lediglich außen eine erstarrte Haut aufweist und in seinem Inneren praktisch noch flüssig ist. Die Formbandpresse arbeitet nach dem Prinzip zweier einander gegenüberliegender, umlaufender Raupenketten und formt das Schmelzeband zu einer strukturierten Kunststofffläche. Vorteilhaft ist hierbei vorgesehen, daß einzelne Formkörper, die das Formband bilden, im Umkehrbereich noch Abstand von dem Schmelzeband halten und erst im Bereich ihrer Bewegungsbahn hinter der Umkehrung spätestens ab dem ersten Kontakt mit dem Schmelzeband senkrecht zur Schmelzebandoberfläche zugestellt werden. Hierdurch werden Zerrungen des Schmelzebandes vermieden, wie sie auftreten würden, wenn das Schmelzeband schon im Bereich der Umlenkungen der Formbänder mit diesen in Kontakt käme. Mittels der einzelnen Formkörper, die dicht aneinander anliegen, wird das Schmelzeband zu einer gewünschten Struktur verformt.

Um auch ausgewählt verdickte Bereiche bei der Ausformung in der Formpresse zu erzeugen, ist es zweckmäßig, daß die Anpreßkraft der Formkörper einstellbar ist.

Mit einer Veränderung der Länge der Vorkühlstrecke ist es vorteilhaft möglich, den Grad der Abkühlung und damit eine gewisse Vorverfestigung im Schmelzeband zu steuern. Dabei kann die Kühlung einfach durch die Umgebungsluft oder auch durch ein eigens hierfür zugeführtes Kühlfluid erfolgen.

Vorteilhaft ist vorgesehen, daß der Extruderkopf und die Formbandpresse in einer zweiten Dimension relativ zueinander lageveränderbar sind, d.h. insbesondere, daß der Extruderkopf in einer Richtung senkrecht zur Schmelzebandebene verstellbar ist. Beispielsweise ist es bei besonders flüssiger Schmelze ratsam, den Extruderkopf nach oben zu versetzen, da es auf der Strecke vom Extruderkopf bis zum Einlauf in die Formbandpresse zu einem Durchhängen des Schmelzebandes kommt.

Zweckmäßig wird die Laufrichtung A des Schmelzebandes dem Kunststoffmaterial angepaßt, wobei je nach Kunststoffart und dessen Verhalten eine horizontale bis vertikale Ausrichtung vorteilhaft sein kann, wobei bei letzterer das Schmelzeband von oben nach unten läuft.

Erfindungsgemäß wird die erforderliche Breite der aus der Formbandpresse austretenden ausgeformten Kunststofffläche durch Einstellung oder Auswahl der Schlitzbreite des Extruderkopfes vorab grob eingestellt und durch Aufbringung einer Zugkraft auf das Schmelzeband im Betrieb fein eingestellt, wobei die Zugkraft durch unterschiedliche Geschwindigkeiten des Schmelzebandes zwischen dem Extruderkopf und der nachfolgenden Formbandpresse aufbringbar ist. Eine Erhöhung der Geschwindigkeit an der Formbandpresse z.B. erhöht dabei die Zugkraft und macht das Schmelzeband schmaler und umgekehrt.

Die Einstellung gewünschter, auch unterschiedlicher Dicken in gezielten Bereichen ist mit unterschiedlichen technischen Möglichkeiten vorteilhaft erreichbar:

Man kann ein in seiner Spaltweite entsprechend geformtes Schmelzeformwerkzeug am Extruderkopf vorsehen; man kann ein Schmelzeformwerkzeug mit flexibel verstellbaren Spaltbegrenzungsmitteln einsetzen; man kann das Schmelzeformwerkzeug über seine Breite gesehen unterschiedlich temperieren, wodurch in kühleren Zonen der Materialfluß vermindert und damit das Schmelzeband verdünnt wird und umgekehrt; man kann die Formkörper der Formbandpresse so gestalten, daß der Abstand zweier einander gegenüberliegender Formkörper über die Schmelzebandbreite variiert; man kann die Formkörper der Formbandpresse flexibel verformbar gestalten; die Formkörper können in Querrichtung des Schmelzebandes in einzelne Segmente unterteilt werden, die separat in ihrem Abstand zu gegenüberliegenden Formkörpern einstellbar sind.

Die in der Formbandpresse ausgeformten Kunststoffflächen werden anschließend auf Länge abgeteilt, wobei dieses durch Schneiden, Sägen, Stanzen, durch Abschmelzen mit einem erhitzten Draht oder Messer oder durch eine andere geeignete Methode erfolg, und dann flächig oder aufgerollt oder lagenweise gefaltet abgelagert.

Zur Erzielung einer höheren Produktivität kann vorgesehen werden, daß man in der Formbandpresse eine Kunststofffläche mehrfacher, mindestens doppelter Elementbreite ausformt und dann in Längsrichtung teilt. Bei Fertigung der Kunststofffläche in doppelter Elementbreite verbleibt an den einzelnen, nach der Teilung vorliegenden Kunststoffflächen auch bei einer mechanischen Trennung noch eine geschmolzene Längskante, die dann zweckmäßig in der höher beanspruchten Elementseite zu liegen kommt. Bei Anwendung von schmelzenden Trennverfahren für das Teilen in Längsrichtung bleiben sämtliche Kanten der dann entstehenden Kunststoffflächen geschmolzene Kanten. Bei den schmelzenden Trennverfahren kann es sich z.B. um Heißdraht-, Heißmesser- oder Laserstrahl-Trennverfahren handeln.

Für manche Anwendungen kann es vorteilhaft sein, zwischen den in dem Einbauelement durch die Kunststoffflächen gebildeten Strömungswegen zusätzliche Verbindungen zur Verfügung zu stellen. Hierzu ist vorgesehen, daß man zumindest einen Teil der Kunststoffflächen wenigstens auf einem Teil ihrer Fläche mit auswählbar angeordneten Durchbrechungen versieht. Die Durchbrechungen können dabei z.B. durch thermische oder mechanische Verfahren erzeugt werden.

Vorteilhaft werden die ausgeformten Kunststoffflächen zur Gefügereifung eine Zeit von etwa einer Stunde bis wenige Tage gelagert. Unter Gefügereifung kann dann z.B. eine Aushärtung oder eine Nachkristallisation bei teilkristallinen Polymeren verstanden werden.

Zweckmäßig werden mehrere Kunststoffflächen formschlüssig und/oder außenkonturbegrenzt bei der Gefügereifung aufeinandergestapelt. Hierdurch werden die einzelnen Kunststoffflächen sehr formstabil und außerdem wird eine sehr gute Formübereinstimmung und Maßhaltigkeit der einzelnen Kunststoffflächen untereinander gewährleistet.

In einem weiteren Verfahrensschritt werden dann die einzelnen Kunststoffflächen zu den Einbauelementen miteinander verbunden, wobei dies in der Weise erfolgt, daß eine Kunststofffläche in ihrer ursprünglichen Lage und die darauf folgende Kunststofffläche in einer um 180° gewendeten Lage usw. übereinandergelegt werden. Die Kunststoffflächen sind dabei so verformt, daß bei der Stapelung übereinander abgeflachte Bereiche der jeweils benachbarten Kunststoffflächen in Anlage aneinander gelangen. Nach dem Auflegen jeweils einer Kunststofffläche wird durch eine Verbindungseinrichtung, wie z.B. eine Schweißeinrichtung mit einer Vielzahl von zustellbaren Elektroden, die Verbindung an den hierfür vorgesehenen abgeflachten Bereichen durchgeführt, wobei diese Verbindung zumindest an den Längsrändern und je nach Breite der Kunststoffflächen auch auf einer Mittellinie oder auf mehreren Mittellinien erfolgt. Eine Verschweißung erfolgt vorzugsweise in Form in einer Impuls-Thermoverschweißung, d.h. durch einen kurzzeitig durch die Elektrode geleiteten Strom, der zur raschen Aufheizung eines an der Elektrodenspitze vorhandenen ohmschen Widerstandselementes führt.

Weiterhin ist vorteilhaft vorgesehen, daß die einzelnen Schweißelektroden in Form von federnd gelagerten Stempeln ausgebildet sind, um eine Anlage der Elektroden an der Kunststofffläche mit im wesentlichen konstanter Kraft zu gewährleisten. Am Rand der Kunststofffläche können auch Gegenhalter vorgesehen sein, die für den Schweißvorgang unter die einzelnen Schweißpunkte von den Element-Längsseiten her einführbar sind. Im mittleren Bereich der Kunststoffflächen erfolgt die Verschweißung ohne Gegenhalter einfach gegen die Gegenhaltekraft der unterliegenden Kunststofffläche. Die Erhitzung der Elektroden erfolgt bevorzugt erst nach dem Aufsetzen der Elektroden auf die Folie. Nach dem Ende der Erhitzung bleiben die Elektroden noch für eine ausreichende Abkühlzeit auf der Folie stehen und werden dann erst abgehoben, wobei die Schweißleistung durch Variation von Strom, Spannung und/oder Schweißzeit regulierbar ist. Zur Einsparung von Transportvolumen kann auch vorgesehen sein, daß die Schweißeinrichtung mobil ausgeführt ist, um die Einbauelemente erst am Ort ihres vorgesehenen Einbaus durch Verschweißen aus den einzelnen Kunststoffflächen herzustellen. Während des Transports sind die einzelnen Kunststoffflächen dann, wie zuvor schon erwähnt, formflüssig ineinander gestapelt, wobei diese Transportphase dann sogar als Reifungszeit genutzt werden kann.

Vorteilhaft wird das Schmelzeband vor dem Einlauf in die Formbandpresse in einem Walzenpaar verformt, welches Erhöhungen und Vertiefungen auf den Walzenmänteln aufweist, so daß auf dem verformten Schmelzeband ausgewählt verdickte Bereiche entstehen, die auch in der ausgeformten Kunststofffläche erhalten bleiben.

In einer vorteilhaften Ausgestaltung des Verfahrens ist vorgesehen, daß mit einem weiteren Extruderkopf ein schmaler Kunststoffstreifen parallel zu dem Schmelzeband extrudiert und unmittelbar nach dem Austritt aus dem Extruderkopf im quasi noch flüssigen Zustand mit dem Randbereich oder einem anderen zu verdickenden Bereich des Schmelzebandes zusammengeführt wird, so daß ein materialeinheitlicher Körper ohne Grenzflächen oder Inhomogenitäten entsteht. Das Schmelzeband, das aus dem ersten Extruderkopf ausläuft, kann dann eine über seine gesamte Breite konstante Dicke aufweisen.

Alternativ dazu ist vorteilhaft vorgesehen, daß eine ausgewählte Dickenänderung des Schmelzebandes bei der Ausformung in der Formbandpresse dadurch erreicht wird, daß man Bereiche von Formkörpern oder einzelne Formkörper durch regelbare Heiz- und/oder Kühlvorrichtungen ausgewählt temperiert. Höher erwärmte Bereiche des Schmelzebandes werden dadurch zu einer geringeren Dicke verformt und umgekehrt.

An am Rand gelegenen Schweißstellen können vorteilhaft im Querschnitt U-förmige Kunststoffclips oder Profilabschnitte aufgesteckt werden, um mehr Kunststoffmasse für die Verschweißung zur Verfügung zu stellen und um vorab schon einen gewissen mechanischen Zusammenhalt zu bewirken.

Zwischen zwei ausgeformte Kunststoffflächen kann vorteilhaft bei Bedarf jeweils eine weitere Kunststofffläche, wahlweise eben oder strukturiert oder auch gelocht oder als Gitter ausgebildet, eingelegt werden, um die Steifigkeit des fertigen Elementes zu erhöhen, wobei man diese weitere Kunststofffläche zuvor noch mit auswählbar angeordneten Durchbrechungen versehen kann, welche wahlweise schon bei der Ausformung der Kunststoffflächen erzeugt werden oder nachträglich z.B. in einer kontinuierlichen Stanzeinrichtung angebracht werden. Der im letzteren Fall entstehende Stanzabfall kann dann umgehend wieder aufgeschmolzen und damit wiederverwendet werden.

Weiterhin kann vorgesehen sein, daß man einzelne Kunststoffflächen mit einer vergrößerten Breite herstellt und diese Kunststoffflächen zur Bildung von zu- und/oder abströmseitigen Abstandshaltern im Element verteilt anordnet. Die Breitenvergrößerung liegt dabei vorzugsweise im Bereich von 0,5 bis 5 %. Eine vorteilhafte funktionelle Funktion bieten auf diese Art gebildete Abstandshalter insbesondere bei Stapelung von Einbauelementen übereinander, wodurch dann an den Übergängen von dem einen zum nächstfolgenden Element zwischen den Kunststoffflächen vergrößerter Breite relativ große Übergangsbereiche gebildet werden, die eine vorteilhaftere Verteilung und/oder einen geringeren Strömungswiderstand für die durchströmenden Fluide bieten. In diesem Zusammenhang kann ergänzend vorgesehen sein, daß die Kunststoffflächen vergrößerter Breite schwerer, d.h. insbesondere mit einer größeren Materialsträke als die unverbreiterten Kunststoffflächen hergestellt werden, um sie ihrer vergrößerten Belastung entsprechend zu dimensionieren.

Eine weitere vorteilhafte Gestaltung der Erfindung sieht vor, das Schmelzeband nicht als ebene Fläche, sondern mit zwei oder mehr Hohlbereichen in Form von Kanälen zu erzeugen, die dann als in Längsrichtung verlaufende Strömungswege zur Verfügung stehen. Dabei können die Hohlbereiche voneinander getrennt sein oder in Querrichtung miteinander verbunden sein. Außerdem können die Hohlbereiche im Verlauf der späteren Verformung noch verformt werden, z.B. auch mit Unterbrechungen in vorgebbaren Abständen versehen werden. Bei letzterer Ausführung müssen dann zur Gewährleistung eines Strömungsdurchlasses noch Querverbindungen bestehen bleiben.

Schließlich ist noch vorteilhaft vorgesehen, das Schmelzeband oder die ausgeformten Kunststoffflächen zu fluorieren, um die Oberflächenenergie des Kunststoffes so zu verändern, daß er sowohl für die durchströmenden Betriebsmedien oder -fluide als auch für Verbindungsstoffe, wie Klebstoff, besser benetzbar wird und daß eine Verklebbarkeit sowie ein besseres Bauteilverhalten im Betrieb ermöglicht wird.

Die verwendete Formbandpresse entspricht in ihrer Ausgestaltung vorteilhaft der des weiter vorn beschriebenen Verfahrens; ebenso wird die Gefügereifung und die Verbindung mehrerer ausgeformter Kunststoffflächen wie in dem weiter vorn beschriebenen Verfahren durchgeführt, so daß zur Vermeidung von Wiederholungen auf die vorherigen Ausführungen Bezug genommen wird.

Die Vorrichtungen zur Durchführung des Verfahrens nach Patentanspruch 1 mit den in den rückbezogenen Unteransprüchen beschriebenen Ausgestaltungen weisen einen an sich bekannten Extruder mit einem zugehörigen Extruderkopf auf. Weiter ist mindestens ein Schmelzeformwerkzeug, eine kontinuierlich betreibbare Formbandpresse, wobei die Geschwindigkeit der Formbandpresse abhängig von der Geschwindigkeit des Schmelzebandes durch eine Einrichtung zur Messung der Breite der Kunststofffläche steuerbar ist, eine Einrichtung zur Abteilung und flächigen Ablagerung und/oder Aufwicklung und/oder Faltung der erzeugten Kunststoffflächen und mindestens eine taktweise betreibbare Verbindungseinrichtung vorgesehen.

Das Schmelzeformwerkzeug erlaubt vielfältige Gestaltungsmöglichkeiten des Schmelzebandes:

Durch Spaltweiten-Einstelleinrichtungen kann die Dickenverteilung des Schmelzebandes reguliert werden, durch Heiz- und/oder Kühleinrichtungen ist die gleiche Wirkung erzielbar.

Zusätzliche Einrichtungen am Schmelzeformwerkzeug, beispielsweise in Form von Sonden, ermöglichen das Einleiten eines kühlenden Fluids, beispielsweise Luft, in verdickte, hohle Bereiche, wodurch sich in dem Schmelzeband langgestreckte Kanäle ausbilden, die durch die Kühlung eine Vorverfestigung erfahren.

Eine ausgewählte Dickenverteilung im Schmelzeband ist auch durch ein entsprechend profiliertes Walzenpaar erreichbar, wobei das Schmelzeband vorzugsweise zunächst mit einer gleichmäßigen Dicke erzeugt wird.

Die im nächsten Verfahrensabschnitt eingesetzte Formbandpresse bietet ebenfalls eine Vielzahl von Gestaltungsmöglichkeiten für die ausgeformte Kunststofffläche:

Die Formbänder sind auswechselbar und für die gewünschte Struktur der Kunststoffflächen auswählbar. Dabei ist die Anordnung der Formkörper variabel, wobei wahlweise elastisch verformbare Formkörper und/oder temperierbare, d.h. gezielt heiz- und/oder kühlbare Formkörper Verwendung finden, um ausgewählte Bereiche der Kunststoffflächen in ihrer Dicke zu verändern.

Der Antrieb der Formbänder erfolgt üblicherweise an den von der Extruderseite abgewandten Walzen oder Zahnrädern oder Zahnkränzen z.B. durch regelbare Elektromotoren und/oder hydaulische Antriebe.

Es ist vorteilhaft vorgesehen, den Extruder und/oder die Formbandpresse bewegbar zu gestalten, um den Abstand zwischen den beiden und damit die Länge der Vorkühlstrecke zu verändern.

Das Abteilen der ausgeformten Kunststoffflächen erfolgt in einer an sich bekannten Einrichtung durch Sägen, Schneiden, Abtrennen mit Schmelzdraht oder ähnliche bekannte Verfahren. Wahlweise ist die Kunststofffläche auch in einer Wickelvorrichtung aufwickelbar oder in Lagen faltbar.

Das Befestigen der Kunststoffflächen erfolgt taktweise in einer Vorrichtung vorzugsweise durch gleichzeitiges Verschweißen an den zweckmäßig verdickten Befestigungsstellen, wozu die Schweißvorrichtung eine entsprechende Zahl von Schweißelektroden mit Widerstandselementen an ihrer Spitze aufweist, die als federnd gelagerte Stempel ausgebildet und deren Schweißleistung einzeln oder in Gruppen durch Veränderung von Stromstärke und/oder Spannung und/oder Zeit regulierbar ist.

Zumindest die Schweißvorrichtung ist zweckmäßig mobil, um sie am Einsatzort der Einbauelemente einsetzbar zu machen und damit Transportvolumen zu sparen, da die Kunststoffflächen in ineinandergelegter und damit raumsparender Weise transportiert werden können. Bei Bedarf kann auch die gesamte Vorrichtung für die Herstellung der Elemente mobil ausgeführt sein.

Ausgestaltungen der Vorrichtung und des Schmelzebandes werden nachstehend in einer Zeichnung erläutert. Sie zeigt in:
- Figur 1: sehr schematisch eine Seitenansicht eines Extruderkopfes mit dem Einlauf eines Schmelzebandes in eine Formbandpresse,
- Figur 2: eine Randansicht einer Ausgestaltung einer Kunststofffläche und
- Figur 3: einen Querschnitt durch eine andere Ausgestaltung eines Schmelzebandes.

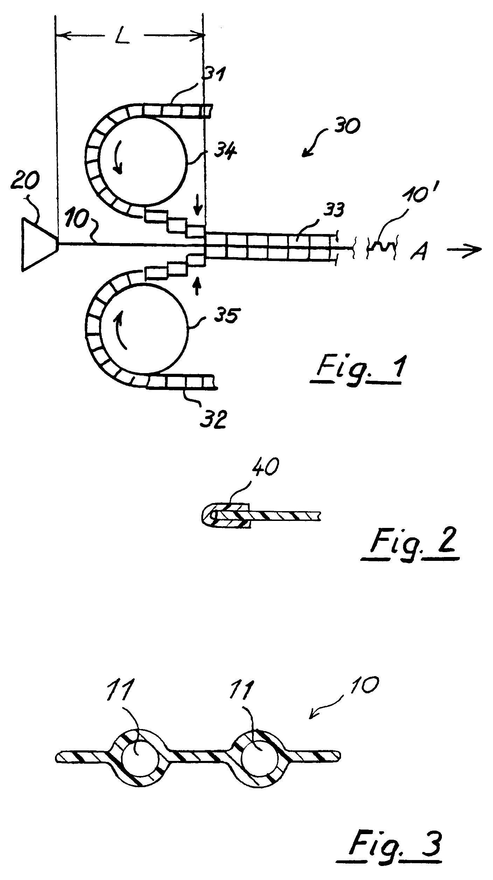

In Figur 1 tritt ein Schmelzeband 10 in Laufrichtung A aus einem Extruderkopf 20 aus und durchläuft eine Vorkühlstrecke L, bis es in eine Formbandpresse 30 eintritt, von der nur die vorderen Walzen 34, 35 dargestellt sind, über welche Formbänder 31, 32 laufen. Die Formbänder 31, 32 weisen eine Vielzahl von Formkörpern 33 auf, die am Ende der Vorkühlstrecke L auf das Schmelzeband 10 zu bewegt werden und die Verformung bewirken. Das Schmelzeband 10 ist nach Durchlauf durch die Formbandpresse 30 zu einer strukturierten Kunststofffläche 10' ausgeformt und hinreichend abgekühlt.

In Figur 2 ist ein Profilstück 14 aus Kunststoff, das einen allgemein U-förmigen Querschnitt aufweist, seitlich auf den Rand einer Kunststofffläche aufgeschoben.

In Figur 3 ist eine Ausgestaltung eines Schmelzebandes 10 dargestellt, in das zwei langgestreckte Kanäle 11 durch ein entsprechend gestaltetes Schmelzeformwerkzeug eingeformt sind.

## Patentansprüche

1. Verfahren zur Herstellung eines Einbauelements für Wärmetauscher-, Stoffaustauscher- und/oder Bioreaktor-Systeme, mit mindestens zwei miteinander verbundenen Wänden aus strukturierten thermoplastischen Kunststoffflächen,
**dadurch gekennzeichnet**,
daß man die mindestens zwei Kunststoffflächen nacheinander herstellt, indem man jeweils ein aus einem Schmelzeformwerkzeug am Extruderkopf (20) eines Extruders austretendes Schmelzeband (10) nach Durchlaufen einer Vorkühlstrecke L kontinuierlich in eine Formbandpresse (30) einführt, daß man das Schmelzeband (10) in der Formbandpresse kontinuierlich zu einer strukturierten Kunststofffläche (10') ausformt, daß man die erforderliche Breite der aus der Formbandpresse (30) austretenden ausgeformten Kunststofffläche (10') durch Einstellung oder Auswahl der Schlitzbreite des Extruderkopfes (20) vorab grob einstellt und durch Aufbringung einer Zugkraft auf das Schmelzeband (10) im Betrieb fein einstellt, wobei die Zugkraft durch unterschiedliche Geschwindigkeiten des Schmelzebandes (10) zwischen dem Extruderkopf (20) und der nachfolgenden Formbandpresse (30) aufbringbar ist, und daß man die ausgeformte, strukturierte Kunststofffläche (10') abkühlend fixiert.

2. Verfahren nach Anspruch 1, dadurch gekennzeichnet, daß man die Länge der Vorkühlstrecke L durch Ändern des Abstandes des Extruderkopfes (20) von der Formbandpresse (30) verändert.

3. Verfahren nach Anspruch 1 oder 2, dadurch gekennzeichnet, daß man den Extruderkopf (20) und die Formbandpresse (30) relativ zueinander und senkrecht zur Schmelzebandlaufrichtung A einstellbar anordnet.

4. Verfahren nach einem der vorangegangenen Ansprüche, dadurch gekennzeichnet, daß man die Schmelzebandlaufrichtung A in einem Winkel zwischen 0 und 90° zur Horizontalen ausrichtet.

5. Verfahren nach einem der vorangegangenen Ansprüche, dadurch gekennzeichnet, daß man die gewünschte, über die Breite auch unterschiedliche Dicke der aus der Formbandpresse (30) austretenden ausgeformten Kunststofffläche (10') durch ein entsprechend geformtes Schmelzeformwerkzeug am Extruderkopf (20) einstellt.

6. Verfahren nach einem der Ansprüche 1 bis 4, dadurch gekennzeichnet, daß man die gewünschte Dicke über die Breite der aus der Formbandpresse (30) austretenden ausgeformten Kunststofffläche (10') dadurch einstellt, daß man den Abstand mindestens zweier einander gegenüberliegender Formkörper (33) in der Formbandpresse (30) über die Schmelzebandbreite variiert.

7. Verfahren nach einem der vorangegangenen Ansprüche, dadurch gekennzeichnet, daß man die in der Formbandpresse (30) ausgeformte Kunststofffläche (10') auf Länge abteilt und flächig oder aufgerollt oder lagenweise gefaltet ablagert.

8. Verfahren nach einem der vorangegangenen Ansprüche, dadurch gekennzeichnet, daß man in der Formbandpresse (30) eine Kunststofffläche (10') mehrfacher, mindestens doppelter Elementbreite ausformt und dann in Längsrichtung teilt.

9. Verfahren nach einem der vorangegangenen Ansprüche, dadurch gekennzeichent, daß man zumindest einen Teil der Kunststoffflächen (10') wenigstens auf einem Teil ihrer Fläche mit auswählbar angeordneten Durchbrechungen versieht.

10. Verfahren nach einem der vorangegangenen Ansprüche, dadurch gekennzeichnet, daß man die ausgeformte Kunststofffläche (10') zur Gefügereifung eine Zeit T lagert.

11. Verfahren nach Anspruch 10, dadurch gekennzeichnet, daß man die Zeit T im Bereich von einer Stunde bis wenige Tage einstellt.

12. Verfahren nach einem der Ansprüche 10 oder 11, dadurch gekennzeichnet, daß man mehrere abgeteilte, ausgeformte Kunststoffflächen (10') formschlüssig und/oder außenkonturbegrenzt aufeinanderlegt und zur Gefügereifung eine Zeit T lagert.

13. Verfahren nach einem der Ansprüche 7 bis 12, dadurch gekennzeichnet, daß man zwei abgeteilte, ausgeformte Kunststoffflächen (10'), von denen eine eine gewendete Lage einnimmt, aufeinanderlegt, daß man die aufeinandergelegten Kunststoffflächen an auswählbaren Befestigungsstellen verschweißt und/oder verklemmt und/oder verklebt, und daß man in gewünschter Zahl jeweils eine weitere Kunststoffolie auf die verschweißten und/oder verklemmten und/oder verklebten Kunststoffolien auflegt und zu einem Einbauelement verschweißt und/oder verklemmt und/oder verklebt.

14. Verfahren nach einem der vorangegangenen Ansprüche, dadurch gekennzeichnet, daß man vor dem Einlauf in die Formbandpresse (30) das Schmelzeband in einem Walzenpaar, welches Erhöhungen und Vertiefungen auf den Walzenmänteln aufweist, dergestalt verformt, daß die ausgeformte Kunststofffläche auswählbar verdickte Bereiche aufweist.

15. Verfahren nach einem der vorangegangenen Ansprüche, dadurch gekennzeichnet, daß man dem schmelzeband für auswählbar verdickte Bereiche mindestens ein schmaleres weiteres Schmelzeband aus einem weiteren einstellbaren Schmelzeformwerkzeug zuführt, wobei dieses weitere Schmelzeformwerkzeug an dem Extruderkopf (20) oder an einem weiteren Extruderkopf vorgesehen ist.

16. Verfahren nach einem der vorangegangenen Ansprüche, dadurch gekennzeichnet, daß man die Kunststoffolie in auswählbaren Bereichen während der Verformung in der Formbandpresse (30) aufheizt und/oder kühlt.

17. Verfahren nach Anspruch 13, dadurch gekennzeichnet, daß man im Bereich von am Rand der Kunststoffolie gelegenen Schweißstellen vor der Verschweißung Profilstücke (40) aus Kunststoff aufschiebt, die einen allgemein U-förmigen Querschnitt aufweisen, wobei der Abstand zwischen den U-Schenkeln mindestens etwa der einfachen Dicke bis maximal der doppelten Dicke der Kunststofffläche (10') entspricht.

18. Verfahren nach Anspruch 13, dadurch gekennzeichnet, daß man vor dem Verschweißen und/oder Verklemmen und/oder Verkleben zwischen je zwei abgeteilte, ausgeformte Kunststoffflächen (10') eine weitere Kunststofffläche, wahlweise eben oder strukturiert und/oder gelocht oder als Gitter ausgebildet, einlegt.

19. Verfahren nach Anspruch 18, dadurch gekennzeichnet, daß man die weitere Kunststofffläche vor ihrem Einlegen mit auswählbar angeordneten Durchbrechungen versieht.

20. Verfahren nach einem der vorangegangenen Ansprüche, dadurch gekennzeichnet, daß man einzelne Kunststoffflächen (10') mit einer vergrößerten Breite herstellt und diese Kunststoffflächen (10') zur Bildung von zu- und/oder abströmseitigen Abstandshaltern im Element verteilt anordnet.

21. Verfahren nach einem der vorangegangenen Ansprüche, dadurch gekennzeichnet, daß man mit einem Schmelzeformwerkzeug in dem austretenden Schmelzeband (10) mindestens zwei sich in Schmelzbandlaufrichtung A erstreckende, voneinander und von den Seiten beabstandete Kanäle (11) erzeugt, und daß man die Kanäle (11) mit einer kraftschlüssig am Schmelzeformwerkzeug befestigten Vorrichtung mit einem kühlenden Fluid füllt.

22. Verfahren nach Anspruch 21, dadurch gekennzeichnet, daß man in der Formbandpresse (30) die Kanäle (11) nach einstellbaren Längenabschnitten zumindest teilweise unterbricht und die Längenabschnitte benachbarter Kanäle mit Querverbindungen verbindet.

23. Verfahren nach Anspruch 21, dadurch gekennzeichnet, daß man die mindestens zwei Kanäle in der Formbandpresse (30) durch Querverbindungen fluiddurchgängig miteinander verbindet.

24. Verfahren nach einem der vorangegangenen Ansprüche, dadurch gekennzeichnet, daß man das Schmelzeband (10) oder die ausgeformte Kunststofffläche (10') fluoriert.

25. Vorrichtung zur Durchführung des Verfahrens nach einem oder mehreren der Ansprüche 1 bis 24, mit mindestens einem einen Extruderkopf (20) aufweisenden Extruder, gekennzeichnet durch ein am Extruderkopf (20) angeordnetes Schmelzeformwerkzeug, eine Einrichtung zum Temperieren des Schmelzebandes, eine kontinuierlich betreibbare Formbandpresse (30), wobei die Geschwindigkeit der Formbandpresse (30) abhängig von der Geschwindigkeit des Schmelzebandes (10) durch eine Einrichtung zur Messung der Breite der Kunststofffläche (10') steuerbar ist, eine Einrichtung zur Abteilung, flächigen Ablagerung und/oder Aufwicklung und/oder Faltung der erzeugten Kunststoffflächen (10') und mindestens eine taktweise betreibbare Verbindungseinrichtung.

26. Vorrichtung nach Anspruch 25, dadurch gekennzeichnet, daß mindestens ein weiteres Schmelzeformwerkzeug vorgesehen ist.

27. Vorrichtung nach Anspruch 25 oder 26, dadurch gekennzeichnet, daß das Schmelzeformwerkzeug eine auswählbar unterschiedliche Spaltweite aufweist.

28. Vorrichtung nach Anspruch 27, dadurch gekennzeichnet, daß die unterschiedliche Spaltweite durch Spaltbegrenzungsmittel einstellbar ist.

29. Vorrichtung nach einem der Ansprüche 25 bis 28, dadurch gekennzeichnet, daß eine an dem Schmelzeformwerkzeug kraftschlüssig befestigte Vorrichtung vorgesehen ist, mit der mindestens zwei sich in Schmelzebandlaufrichtung erstreckende Kanäle in dem Schmelzeband formbar und mit einem kühlenden Fluid füllbar sind.

30. Vorrichtung nach einem der Ansprüche 25 bis 29, dadurch gekennzeichnet, daß das Schmelzeformwerkzeug in auswählbaren Spaltbereichen auswählbar temperierbar ist.

31. Vorrichtung nach einem der Ansprüche 25 bis 30, dadurch gekennzeichnet, daß die Position des Schmelzeformwerkzeuges in einer Richtung parallel und/oder in einer Richtung senkrecht zur Schmelzebandlaufrichtung A verstellbar ist und/oder daß die Schmelzebandlaufrichtung A in einem Winkel zwischen 0 und 90° zur Horizontalen ausrichtbar ist.

32. Vorrichtung nach Anspruch 25, dadurch gekennzeichnet, daß ein Walzenpaar vorgesehen ist, welches Erhöhungen und Vertiefungen auf den Walzenmänteln aufweist, wobei das aus dem Extruderkopf (20) austretende Schmelzeband durch das Walzenpaar verformbar ist.

33. Vorrichtung nach einem der Ansprüche 25 bis 31, dadurch gekennzeichnet, daß die Formbandpresse (30) zwei je durch ein Walzenpaar oder Zahnradpaar oder Zahnkranzpaar oder eine Kombination daraus angetriebene, gegenläufig umlaufende Formbänder (31, 32) aufweist, die eine Vielzahl von im Bereich zwischen dem Walzen- oder Zahnrad- oder Zahnkranzpaar senkrecht zum Schmelzeband bewegbaren Formkörpern (33) aufweisen.

34. Vorrichtung nach Anspruch 33, dadurch gekennzeichnet, daß die Formkörper (33) an den Formbändern (31, 32) im Bereich des Einlaufes des Schmelzebandes in Schmelzebandlaufrichtung A stetig oder schrittweise zunehmend auf das Schmelzeband zu bewegbar sind.

35. Vorrichtung nach einem der Ansprüche 33 oder 34, dadurch gekennzeichnet, daß die Anpreßkraft der Formkörper (33) einstellbar ist.

36. Vorrichtung nach einem der Ansprüche 33 bis 35, dadurch gekennzeichnet, daß zumindest ein Formkörper (33) flexibel verformbar ist oder in Querrichtung des Schmelzebandes einzelne, separat in ihrem Abstand zu gegenüberliegenden Formkörpern einstellbare Segmente aufweist.

37. Vorrichtung nach einem der Ansprüche 33 bis 36, dadurch gekennzeichnet, daß die Formbandpresse (30) regelbare Heiz- und/oder Kühlvorrichtungen an auswählbaren Formkörpern (33) oder Formkörperbereichen aufweist.

38. Vorrichtung nach einem der Ansprüche 25 bis 37, dadurch gekennzeichnet, daß die Verbindungseinrichtung eine der Vielzahl der Befestigungsstellen entsprechende Zahl von Schweißelektroden mit Widerstandselementen an ihrer Spitze aufweist, die als federnd gelagerte Stempel ausgebildet und deren Schweißleistungen einzelnd oder in Gruppen regulierbar sind.

39. Vorrichtung nach einem der Ansprüche 25 bis 38, dadurch gekennzeichnet, daß zumindest die Verbindungseinrichtung mobil ausgeführt ist.

40. Vorrichtung nach Anspruch 39, dadurch gekennzeichnet, daß die Verbindungseinrichtung in einem an sich bekannten Transportcontainer unterbringbar ist.

## Claims

1. Method for producing a built-in-element for heat exchangers, material exchangers and/or bioreactor-systems comprising at least two walls connected with each other and made of structured thermoplastic plastic webs,
**characterized in**
that the at least two plastic webs are produced one after the other by continuously feeding a melt strip (10) being discharged from a melt forming tool at the extrusion head (20) of an extruder into a strip forming press (30) after passing a precooling distance L, that the melt strip (10) is continuously formed in the strip forming press into a structured plastic web (10'), that the required width of the formed plastic web (10') being discharged from the strip forming press (30) is at first coarsely adjusted by adjusting or selecting the slot width of the extrusion head (20), and during operation is finely adjusted by excerting a tension force onto the melt strip (10) wherein the tension force is to be excerted by different speeds of the melting strip (10) between the extrusion head (20) and the subsequent strip forming press (30), and that the formed structured Plastic web (10') is cooled and set.

2. Method according to claim 1, characterized in that the length of the precooling distance L is changed by varying the distance of the extrusion head (20) from the strip forming press (30).

3. Method according to claim 1 or 2, characterized in that the extrusion head (20) and the strip forming press (30) are adjustably arranged in relation to each other and perpendicularly to the direction A of the melt strip.

4. Method according to one of the preceeding claims, characterized in that the running direction A of the melt strip is adjusted in an angle between 0 and 90° in relation to the horizontal axis.

5. Method according to one of the preceeding claims, characterized in that the required thickness which may vary across the width of the plastic web (10') being discharged from the strip forming press (30) is adjusted by a correspondingly shaped melt forming tool at the extrusion head (20).

6. Method according to one of the claims 1 to 4, characterized in that the required thickness across the width of the formed plastic web (10') being discharged from the strip forming press (30) is adjusted in that the distance of at least two forming bodies (33) arranged opposite to each other in the strip froming press (30) is varied across the melt strip width.

7. Method according to one of the preceeding claims, characterized in that the plastic web (10') formed in the strip forming press (30) is divided by length and stored flat or rolled or folded in charges.

8. Method according to one of the preceeding claims, characterized in that in the strip forming press (30) one plastic web (10') is formed in manifold, at least double width of the element and then is divided in longitudinal direction.

9. Method according to one of the preceeding claims, characterized in that at least a part of the plastic webs (10') at least at a part of the area thereof is provided with selectively arranged apertures.

10. Method according to one of the preceeding claims, characterized in that the formed plastic web (10') is stored for a time T for structure maturing.

11. Method according to claim 10, characterized in that the time T is adjusted in the range of one hour to a few days.

12. Method according to one of the claims 10 or 11, characterized in that several divided formed plastic webs (10') are placed one on top of the other in positive engagement and/or with a common outer contour, and are stored for a time T for structure maturing.

13. Method according to one of the claims 7 to 12, characterized in that two divided formed plastic webs (10') are placed one on top of the other wherein one of them takes a reverse position, that the plastic webs placed onto each other are welded and/or clamped and/or glued at selectable connection points, and that in the required number a further plastic foil is placed onto the welded and/or clamped and/or glued plastic foils, and that the plastic foils are welded and/or clamped and/or glued to form a built-in-element.

14. Method according to one of the preceeding claims, characterized in that prior to the feeding into the strip forming press (30) the melt strip is formed in a pair of rollers comprising projections and indentations at the roller jackets such that the formed plastic web comprises selectably thickened areas.

15. Method according to one of the preceeding claims, characterized in that the melt strip for selectably thickened areas is provided with at least one further narrow melt strip from a further adjustable melt forming tool wherein this further melt forming tool is arranged at the extrusion head (20) or at a further extrusion head.

16. Method according to one of the preceeding claims, characterized in that the plastic foil in selectable areas thereof is heated and/or cooled during the forming in the strip forming press (30).

17. Method according to claim 13, characterized in that in areas of welding points positioned at the edge of the plastic foil prior to the welding profiled members (40) of plastic material are pushed onto which comprise a generally U-shaped cross-section wherein the distance between the legs of the U corresponds at least approximately with the single thickness up to at maximum the double thickness of the plastic web (10').

18. Method according to claim 13, characterized in that prior to the welding and/or clamping and/or glueing a further plastic web which is selectably plane or structured and/or provided with apertures or shaped as a grid is laid between two divided formed plastic webs (10').

19. Method according to claim 18, characterized in that the further plastic web prior to the insertion thereof is provided with selectively arranged apertures.

20. Method according to one of the preceeding claims, characterized in that single plastic webs (10') with an enlarged width are manufactured, and that these plastic webs (10') are arranged across the element for forming spacers at the side of the inlet and/or outlet of the flow.

21. Method according to one of the preceeding claims, characterized in that at least two passages extending in the running direction A of the melt strip, and spaced apart from each other and from the edges are produced with a melt forming tool in the melt strip (10) being discharged, and that the passages (11) are filled with a cooling fluid by means of a device being non-positively fastened at the melt forming tool.

22. Method according to claim 21, characterized in that the passages (11) are at least partly discontinued in adjustable length sections in the strip forming press (30), and that the length sections of adjacent passages are connected with cross connections.

23. Method according to claim 21, characterized in that the at least two passages in the strip forming press (30) are connected by cross connections in a fluid-open manner.

24. Method according to one of the preceeding claims, characterized in that the melt strip (10) and/or the formed plastic web (10') are fluoridated.

25. Device for accomplishing the method according to one or several of the claims 1 to 24 comprising at least one extruder with an extrusion head (20), characterized by a melt forming tool arranged at the extrusion head (20), a device for tempering the melt strip, a continuously operable strip forming press (30) wherein the speed of the strip forming press (30) is controllable by a device for measuring the width of the plastic web (10') dependent from the speed of the melt strip (10), a device for dividing, flat storage and/or rolling and/or folding of the produced plastic webs (10'), and at least one connecting device which is operable in cycles.

26. Device according to claim 25, characterized in that at least a further melt forming tool is provided.

27. Device according to claim 25 or 26, characterized in that the melt forming tool comprises a selectably different slot width.

28. Device according to claim 27, characterized in that the different slot width is adjustable by slot limiting means.

29. Device according to one of the claims 25 to 28, characterized in that a device is provided non-positively secured at the melt forming tool wherein by means of the device two passages in the melt strip extending in the running direction of the melt strip are to be formed and to be filled with a cooling fluid.

30. Device according to one of the claims 25 to 29, characterized in that the melt forming tool may be selectively tempered in selectable slot areas.

31. Device according to one of the claims 25 to 30, characterized in that the position of the melt forming tool is adjustable in a direction in parallel with and/or a direction perpendicularly to the running direction A of the melt strip, and/or that the running direction A of the melt strip is adjustable in an angle between 0 and 90° in relation to the horizontal axis.

32. Device according to claim 25, characterized in that a pair of rollers is provided which has projections and indentations at the roller jackets thereof wherein the melt strip being discharged from the extruder head (20) may be formed by the pair of rollers.

33. Device according to one of the claims 25 to 31, characterized in that the strip forming press (30) comprises two forming strips (31, 32) moving in opposite directions and driven by a pair of rollers or toothed wheels, or toothed gear rims or a combination thereof with the forming strips comprising a plurality of forming bodies (33) movable perpendicularly to the melt strip in the area between the pair of rollers or toothed wheels or gear rim.

34. Device according to claim 33, characterized in that the forming bodies (33) at the forming strips (31, 32) in the inlet area of the melt strip are movable continuously or stepwise increasing in the running direction A of the melt strip in a direction towards the melt strip.

35. Device according to one of the claims 33 or 34, characterized in that the pressing force of the forming bodies (33) is adjustable.

36. Device according to one of the claims 33 to 35, characterized in that at least one forming body (33) is flexibly deformable, or comprises single segments adjustable in the distance towards the adjacent forming body in the cross direction of the melt strip.

37. Device according to one of the claims 33 to 36, characterized in that the strip forming press (30) comprises controllable heating and/or cooling devices at selectable forming bodies (33) or forming body regions.

38. Device according to one of the claims 25 to 37, characterized in that the connecting device comprises a number of welding electrodes with resistor elements at the peaks thereof with the number corresponding with the plurality of connection points with the peaks being formed as resiliently supported plungers with the welding power thereof controllable individually or in groups.

39. Device according to one of the claims 25 to 38, characterized in that at least the connecting device is mobile.

40. Device according to claim 39, characterized in that the connecting device may be housed in a transporting container which is known as such.

## Revendications

1. Procédé de fabrication d'un élément de construction pour systèmes d'échangeur thermique, d'échangeur de matières et/ou de bio-réacteurs, incluant au moins deux parois assemblées entre elles en surfaces de matières thermoplastiques structurées,
caractérisé en ce que les au moins deux surfaces de matière plastique sont fabriquées l'une après l'autre en introduisant respectivement en continu dans une presse (30) à ruban de moulage, après un parcours de refroidissement préalable L, une bande (10) de matière coulée qui sort d'un outil de formage de matière coulée agencé à une tête (20) d'extrudeuse d'une extrudeuse, en ce que la bande (10) de matière coulée est formée en continu dans la presse à ruban de moulage en une surface structurée (10') de matière plastique, en ce que la largeur de la surface (10') de matière plastique transformée qui sort de la presse (30) à ruban de moulage est réglée approximativement au préalable par réglage ou choix de la largeur de fente de la tête d'extrudeuse (20) et est réglée finement en cours de fonctionnement en exerçant une force de traction sur la bande (10) de matière coulée, la force d'étirage pouvant être exercée par des vitesses différentes de la bande (10) de matière coulée entre la tête d'extrudeuse (20) et la presse (30) à ruban de moulage qui la suit, et en ce que la surface structurée (10') de matière plastique transformée est fixée par refroidissement.

2. Procédé selon la revendication 1, caractérisé en ce que la longueur du parcours de refroidissement préalable L est modifiée par modification de la distance de la tête (20) d'extrudeuse à la presse (30) à ruban de moulage.

3. Procédé selon la revendication 1 ou 2, caractérisé en ce que la tête d'extrudeuse (20) et la presse (30) à ruban de moulage sont agencées de façon réglable l'une par rapport à l'autre et perpendiculairement à la direction de déplacement A de la bande de matière coulée.

4. Procédé selon l'une des revendications précédentes, caractérisé en ce que la direction de déplacement A de la bande de matière coulée forme avec l'horizontale un angle compris entre 0 et 90°.

5. Procédé selon l'une des revendications précédentes, caractérisé en ce que l'épaisseur souhaitée, éventuellement différente sur la largeur, de la surface (10') de matière plastique formée qui sort de la presse (30) à ruban de moulage est réglée par un outil de formage de matière coulée façonné de façon correspondante à la tête (20) d'extrudeuse.

6. Procédé selon l'une des revendications 1 à 4, caractérisé en ce que l'épaisseur souhaitée sur la largeur de la surface (10') de matière plastique formée qui sort de la presse (30) à ruban de moulage est réglée en faisant varier la distance d'au moins deux corps de forme (33) superposés dans la presse (30) à ruban de moulage.

7. Procédé selon l'une des revendications précédentes, caractérisé en ce que la surface (10') de matière plastique formée dans la presse (30) à ruban de moulage est divisée à longueur et est déposée à plat ou enroulée ou pliée à longueur.

8. Procédé selon l'une des revendications précédentes, caractérisé en ce que en ce qu'une surface (10') de matière plastique d'une largeur de plusieurs éléments, d'au moins deux éléments, est formée dans la presse (30) à ruban de moulage et qu'elle est ensuite fractionnée dans la direction de la longueur.

9. Procédé selon l'une des revendications précédentes, caractérisé en ce que des découpures agencées au choix sont ménagées dans au moins une partie des surfaces (10') de matière plastique, au moins sur une partie de leur surface.

10. Procédé selon l'une des revendications précédentes, caractérisé en ce que la surface (10') en matière plastique formée est stockée un temps T pour maturation de la structure.

11. Procédé selon la revendication 10, caractérisé en ce que le temps T est réglé dans la plage comprise entre une heure et quelques jours.

12. Procédé selon l'une des revendications 10 ou 11, caractérisé en ce que plusieurs surfaces (10') de matière plastique formées divisées sont empilées en engagement positif et/ou en étant limitées par le contour extérieur et sont stockées un temps T pour la maturation de la structure.

13. Procédé selon l'une des revendications 7 à 12, caractérisé en ce que deux surfaces (10') en matière plastique formées, divisées, dont l'une prend une position retournée, sont superposées, en ce que les surfaces superposées de matière plastique sont soudées et/ou pincées et/ou collées à des emplacements de fixation qui peuvent être choisis et en ce qu'une autre feuille de matière plastique est déposée en nombre souhaité respectivement sur les feuilles de matière plastique soudées et/ou pincées et/ou collées et est soudée et/ou pincée et/ou collée pour former un élément de construction.

14. Procédé selon l'une des revendications précédentes, caractérisé en ce que la bande de matière coulée est déformée, avant son entrée dans la presse (30) à ruban de moulage, dans une paire de rouleaux qui présentent des élévations et des évidements sur les enveloppes de rouleaux, d'une manière telle que la surface de matière plastique formée présente des zones épaissies qui peuvent être choisies.

15. Procédé selon l'une des revendications précédentes, caractérisé en ce qu'une autre bande de matière coulée plus étroite, provenant d'un autre outil réglable de formage de matière coulée est amenée à la bande de matière coulée pour des zones épaissies qui peuvent être choisies, cet autre outil de formage de matière coulée étant prévu sur la tête (20) d'extrusion ou sur une autre tête d'extrusion.

16. Procédé selon l'une des revendications précédentes, caractérisé en ce que la feuille de matière plastique est chauffée et/ou refroidie dans des zones qui peuvent être choisies pendant la dé formation dans la presse (30) à ruban de moulage.

17. Procédé selon la revendication 13, caractérisé en ce que en ce que des pièces profilées (40) en matière plastique qui présentent une section transversale à configuration générale de U sont glissées avant le soudage dans la zone d'emplacements de soudage disposés au bord de la feuille en matière plastique, la distance entre les branches du U correspondant au moins à peu près à une épaisseur comprise entre au moins l'épaisseur simple de la feuille (10') en matière plastique et au plus le double de cette épaisseur.

18. Procédé selon la revendication 13, caractérisé en ce qu'une autre surface de matière plastique, qui peut au choix être plane ou structurée et/ou perforée ou à configuration de grille, est insérée entre deux surfaces successives (10') de matière plastique formées divisées, avant le soudage et/ou le pincement et/ou le serrage.

19. Procédé selon la revendication 18, caractérisé en ce que des découpures dont l'agencement peut être choisi sont ménagées dans l'autre surface en matière plastique avant son insertion.

20. Procédé selon l'une des revendications précédentes, caractérisé en ce que des surfaces individuelles (10') de matière plastique de largeur plus grande sont fabriquées et en ce que ces surfaces (10') de matière plastique sont agencées de façon répartie dans l'élément pour former des entretoises du côté entrée ou du côté sortie.

21. Procédé selon l'une des revendications précédentes, caractérisé en ce qu'au moins deux canaux (11), espacés l'un de l'autre et espacés des côtés, qui s'étendent dans la direction de déplacement A de la bande de matière coulée sont engendrés dans la bande sortante (10) de matière coulée au moyen d'un outil de formage de matière coulée, et en ce que les canaux (11) sont remplis d'un fluide réfrigérant au moyen d'un dispositif fixé par effet de force sur l'outil de formage de matière coulée.

22. Procédé selon la revendication 21, caractérisé en ce que les canaux (11) sont interrompus au moins partiellement en fractions longitudinales partielles réglables, dans la presse (30) à ruban de moulage, et en ce que les fractions longitudinales de canaux voisins sont reliées par des liaisons transversales.

23. Procédé selon la revendication 21, caractérisé en ce que en ce les deux canaux au moins sont reliés entre eux, dans la presse (30) à ruban de moule, par des liaisons transversales qui permettent le passage d'un fluide.

24. Procédé selon l'une des revendications précédentes, caractérisé en ce que la bande (10) de matière coulée ou la surface (10') de matière plastique formée est fluorée.

25. Dispositif de mise en oeuvre du procédé selon une ou plusieurs des revendications 1 à 24, incluant au moins une extrudeuse présentant une tête (20) d'extrudeuse, caractérisé par un outil de formage de matière coulée agencé sur la tête (20) d'extrudeuse, un appareil d'équilibrage de température de la bande de matière coulée, une presse (30) à ruban de moulage actionnable en continu, la vitesse de la presse (30) à ruban de moulage étant réglable en fonction de la vitesse de la bande (10) de matière coulée au moyen d'un appareil de mesure de la largeur de la surface (10') de matière plastique, un appareil de division, de dépôt à plat et/ou d'enroulement et/ou de pliage des feuilles (10') en matière plastique créées et au moins un dispositif d'assemblage actionnable de façon cyclique.

26. Dispositif selon la revendication 25, caractérisé en ce qu'au moins un autre outil de formage de matière coulée est prévu.

27. Dispositif selon la revendication 25 ou 26, caractérisé en ce que la largeur de fente de l'outil de formage de matière coulée peut être différente de façon choisie.

28. Dispositif selon la revendication 27, caractérisé en ce que la largeur différente de fente est réglable par des moyens de limitation de fente.

29. Dispositif selon l'une des revendications 25 à 28 caractérisé en ce qu'il est prévu un dispositif, fixé par effet de force sur l'outil de formage de la bande coulée, au moyen duquel au moins deux canaux qui s'étendent dans la direction de déplacement de la bande de matière coulée peuvent être formés dans la bande de matière coulée et peuvent être remplis d'un liquide réfrigérant.

30. Dispositif selon l'une des revendications 25 à 29, caractérisé en ce que l'outil de formage de bande coulée peut être équilibré en température de façon choisie dans dans des zones de la fente qui peuvent être choisies.

31. Dispositif selon l'une des revendications 25 à 30, caractérisé en ce que la position de l'outil de formage de bande coulée est réglable dans une direction parallèle et/ou dans une direction perpendiculaire à la direction de déplacement A de la bande de matière coulée et/ou en ce que la direction de déplacement A de la bande de matière coulée peut former avec l'horizontale un angle compris entre 0 et 90°.

32. Dispositif selon la revendication 25, caractérisé en ce que en ce qu'il est prévu une paire de rouleaux qui présentent des surélévations et des évidements sur les enveloppes des rouleaux, la bande de matière coulée qui sort de la tête (20) d'extrudeuse pouvant être déformée par la paire de rouleaux.

33. Dispositif selon l'une des revendications 25 à 31, caractérisé en ce que la presse (30) à ruban de coulée comporte deux rubans de coulée (31, 32) qui se déplacent en sens contraires et sont entraînés par une paire de rouleaux ou une paire de roues dentées ou une paire de courroies dentées ou une combinaison de tels éléments, et qui comportent une série de corps de forme (33) mobiles perpendiculairement à la bande de matière coulée dans la zone comprise entre les rouleaux, ou les roues dentées ou les couronnes dentées de cette paire.

34. Dispositif selon la revendication 33, caractérisé en ce que les corps de forme (33) disposés sur les rubans de coulée (31, 32) sont mobiles de façon croissante en continu ou par étapes, pour venir s'appliquer sur la bande de matière coulée, dans la direction de déplacement A de la bande de matière coulée dans la zone de l'entrée de la bande de matière coulée.

35. Dispositif selon l'une des revendications 33 ou 34, caractérisé en ce que la force d'appui des corps de forme (33) est réglable.

36. Dispositif selon l'une des revendications 33 à 35, caractérisé en ce qu'au moins un corps de forme (33) est déformable de façon flexible ou comporte, dans la direction transversale de la bande de matière coulée, des segments individuels dont la distance à des corps de forme opposés est réglable de façon séparée.

37. Dispositif selon l'une des revendications 33 à 36, caractérisé en ce que la presse (30) à ruban de moulage comporte des dispositifs réglables de chauffage et/ou de réfrigération sur des corps de forme (33), ou des zones de corps de formes, qui peuvent être choisis.

38. Dispositif selon l'une des revendication 25 à 37, caractérisé en ce que l'appareil d'assemblage comporte à sa pointe un nombre d'électrodes de soudure pourvues d'éléments résistants qui correspond au nombre des emplacements de fixation, électrodes qui sont réalisées sous forme de poinçons logés élastiquement et dont les puissances de soudage sont réglables individuellement ou par groupes.

39. Dispositif selon l'une des revendications 25 à 38, caractérisé en ce que en ce qu'au moins un appareil d'assemblage est réalisé de façon mobile.

40. Dispositif selon la revendication 39, caractérisé en ce que l'appareil d'assemblage peut être logé dans un conteneur de transport connu en soi.
